# EUROPÄISCHE PATENTANMELDUNG

(11) **EP 1 048 431 A1**
(43) Veröffentlichungstag der Anmeldung: **02.11.2000**
(21) Anmeldenummer: 00108371.6
(22) Anmeldetag: 17.04.2000
(51) Int. Cl.: B29C 45/13, B29C 45/12

(54) **Spritzgiesseinrichtung**

(30) Priorität: 26.04.1999 AT 28399
(71) Anmelder: ENGEL Maschinenbau Gesellschaft mbH, 4311 Schwertberg (AT)
(72) Erfinder: Steinbichler, Georg, 8786 Rottenmann (AT)
(74) Vertreter: Torggler, Paul Norbert, Dr.

(57) **Zusammenfassung**

Spritzgießeinrichtung mit einer ortsfesten Formaufspannplatte (2) und mindestens einer bewegbaren Formaufspannplatte (3) sowie die bewegbare Formaufspannplatte (3) durchsetzenden Holmen (4) zum Verbinden der Formaufspannplatten (2, 3), wobei an der von der ortsfesten Formaufspannplatte (2) abgewandten Seite der bewegbaren Formaufspannplatte (3) eine Einspritzeinrichtung (9) zum Einspritzen durch die bewegbare Formaufspannplatte (3) vorgesehen ist.

## Beschreibung

Die vorliegende Erfindung betrifft eine Spritzgießeinrichtung mit einer ortsfesten Formaufspannplatte und mindestens einer bewegbaren Formaufspannplatte sowie die bewegbare Formaufspannplatte durchsetzenden Holmen zum Verbinden der Formaufspannplatten und einer Einspritzeinrichtung.

Derartige Spritzgießeinrichtungen werden häufig verwendet und üblicherweise als Zwei-Platten-Maschinen bezeichnet. Die ortsfeste sowie die bewegbare Formaufspannplatte tragen dabei jeweils eine Formhälfte, wobei die bewegbare Formaufspannplatte zum Schließen und Öffnen der Form gegenüber der ortsfesten Formaufspannplatte verschoben werden kann. Bisher war es üblich, das Einspritzaggregat nur auf der Seite der ortsfesten Formaufspannplatte anzuordnen und das aufbereitete Kunststoffmaterial durch die ortsfeste Formaufspannplatte in die Form einzuspritzen. Selbst bei jenen Anwendungen, bei denen zwei unterschiedliche Kunststoffkomponenten in die Form eingespritzt werden müssen, versuchte man, beide dazu notwendige Einspritzeinrichtungen an der ortsfesten Formaufspannplatte anzuordnen. Die Einspritzaggregate mußten dabei häufig sehr klein dimensioniert werden, wobei zusätzlich der Nachteil auftrat, daß die Einspritzdüse einer Einspritzeinrichtung außermittig angeordnet werden mußte.

Demgegenüber sieht die vorliegende Erfindung vor, daß sowohl an der ortsfesten Formaufspannplatte als auch an der von der ortsfesten Formaufspannplatte abgewandten Seite der bewegbaren Formaufspannplatte eine Einspritzeinrichtung vorgesehen ist, wobei die Einspritzeinrichtung zum Einspritzen durch die bewegbare Formaufspannplatte und die Einspritzeinrichtung zum Einspritzen durch die ortsfeste Formaufspannplatte einander gegenüberliegen.

Bei Zwei-Platten-Maschinen, bei denen der Bereich hinter der bewegbaren Formaufspannplatte frei ist, kann eine beliebig große Einspritzeinrichtung zum Einspritzen durch die bewegbare Formaufspannplatte vorgesehen werden.

Da im Formenbau allgemein von einer mittigen Einspritzung ausgegangen wird, ist es günstig, wenn die Längsmittelachse der Einspritzeinrichtung zum Einspritzen durch die bewegbare Formaufspannplatte mit der Längsmittelachse der Spritzgießeinrichtung zusammenfällt.

Eine synchrone Bewegung der bewegbaren Formaufspannplatte und der durch die bewegbare Formaufspannplatte einspritzenden Einspritzeinrichtung läßt sich sicherstellen, indem die Einspritzeinrichtung zum Einspritzen durch die bewegbare Formaufspannplatte gemeinsam mit der bewegbaren Formaufspannplatte verschiebbar ist.

Um zusätzlich die durch die bewegbare Formaufspannplatte einspritzende Einspritzeinrichtung von der bewegbaren Formaufspannplatte abheben zu können, ist es günstig, wenn die Einspritzeinrichtung zum Einspritzen durch die bewegbare Formaufspannplatte auf einer mit der bewegbaren Formaufspannplatte verbundenen Konsole angeordnet ist und wenn die Einspritzeinrichtung zum Einspritzen durch die bewegbare Formaufspannplatte auf der Konsole verschiebbar gelagert ist.

Weitere Merkmale und Einzelheiten der vorliegenden Erfindung ergeben sich aus der nachfolgenden Figurenbeschreibung. Dabei zeigt:
- Fig. 1: eine erfindungsgemäße Einrichtung bei geschlossener Form und eingefahrenen Einspritzeinrichtungen,
- Fig. 2: eine erfindungsgemäße Einrichtung bei geöffneter Form und von den Formaufspannplatten abgehobenen Einspritzeinrichtungen,
- Fig. 3: eine erfindungsgemäße Einrichtung mit einer Mittelplatte bei geschlossener Form, und
- Fig. 4: eine erfindungsgemäße Einrichtung mit einer Mittelplatte bei geöffneter Form.

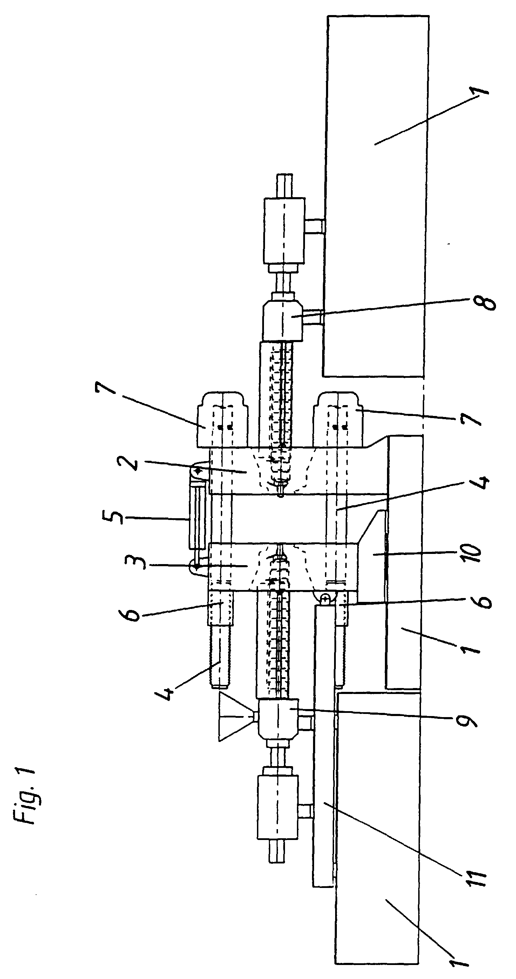

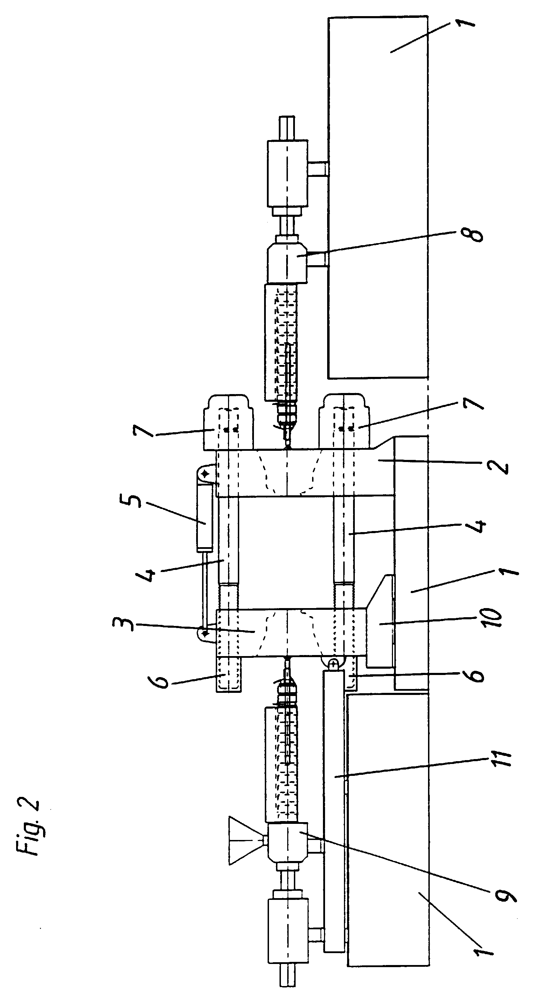

Wie die Fig. 1 und 2 zeigen, weist die erfindungsgemäße Spritzgießeinrichtung ein Grundrahmen 1 auf mit dem die ortsfeste Formaufspannplatte 2 fest verbunden ist. Die bewegbare Formaufspannplatte 3 kann mittels des Eilgangzylinders 5 relativ zur ortsfesten Formaufspannplatte 2 zum Öffnen und Schließen der mit den Formaufspannplatten 2 und 3 verbundenen Form (nicht gezeigt) verschoben werden. Die bewegbare Formaufspannplatte 3 ist dazu über eine Führungskonsole 10 verschiebbar am Grundrahmen 1 gelagert. Vor dem Aufbringen der Schließkraft wird die bewegbare Formaufspannplatte 3 über Verriegelungsvorrichtungen 6 mit den sie durchsetzenden Holmen 4 verriegelt, sodaß anschließend über die Druckkissen 7 der Schließdruck aufgebaut werden kann.

Erfindungswesentlich ist nunmehr, daß auf der Seite der bewegbaren Formaufspannplatte 3 eine Einspritzeinrichtung 9 vorgesehen ist, mit der durch die bewegbare Formaufspannplatte 3 hindurch in die Form eingespritzt wird. An der ortsfesten Formaufspannplatte 2 ist ebenfalls eine Einspritzeinrichtung 8 angeordnet, die ebenfalls aufbereitetes Kunststoffmaterial in die Form einspritzt. Das in den Einspritzeinrichtungen 8 und 9 aufbereitete Kunststoffmaterial kann dabei gleich oder verschieden sein.

Vergleicht man die Fig. 1 und 2, so sieht man, daß beim Öffnen der Form, bei dem die bewegbare Formaufspannplatte 3 von der ortsfesten Formaufspannplatte 2 wegbewegt wird, eine Konsole 11 die Bewegung der bewegbaren Formaufspannplatte 3 mitmacht. Die Konsole 11 trägt die zum Einspritzen durch die bewegbare Formaufspannplatte 3 vorgesehene Einspritzeinrichtung 9. Auf diese Weise wird sichergestellt, daß sich die Einspritzeinrichtung 9 und die bewegbare Formaufspannplatte 3 gemeinsam synchron bewegen. Die Einspritzeinrichtung 9 ist jedoch zusätzlich auf der Konsole 11 gegenüber der bewegbaren Formaufspannplatte 3 verschiebbar, sodaß die Einspritzeinrichtung 9 von der Form abgehoben und aus der bewegbaren Formaufspannplatte 3 herausgezogen werden kann. Auch die Einspritzeinrichtung 8 kann in üblicher Weise von der Form abgehoben und aus der ortsfesten Formaufspannplatte 2 herausgezogen werden. Sie ist dazu verschiebbar am Grundrahmen 1 gelagert.

Damit beide Einspritzeinrichtungen 8 und 9 mittig in die Form einspritzen, sind sie symmetrisch einander gegenüberliegend angeordnet, wobei die Längsmittelachsen der Einspritzeinrichtungen 8 und 9 mit der Längsmittelachse der Spritzgießeinrichtung zusammenfallen.

Das erfindungsgemäße Einspritzen durch die bewegbare Formaufspannplatte läßt sich auch bei einer Sonderform der Zwei-Platten-Maschine realisieren, bei der zu beiden Seiten einer ortsfesten Formaufspannplatte jeweils eine bewegbare Formaufspannplatte angeordnet ist. In diesem Fall wäre es vorstellbar, zwei durch die bewegbaren Formaufspannplatten einspritzende Einspritzeinrichtungen vorzusehen, die jeweils an der von der ortsfesten Formaufspannplatte abgewandten Seite der bewegbaren Formaufspannplatten angeordnet sind. Diese könnten dann ebenfalls symmetrisch einander gegenüberliegend an der Längsmittelachse der Spritzgießeinrichtung angeordnet sein.

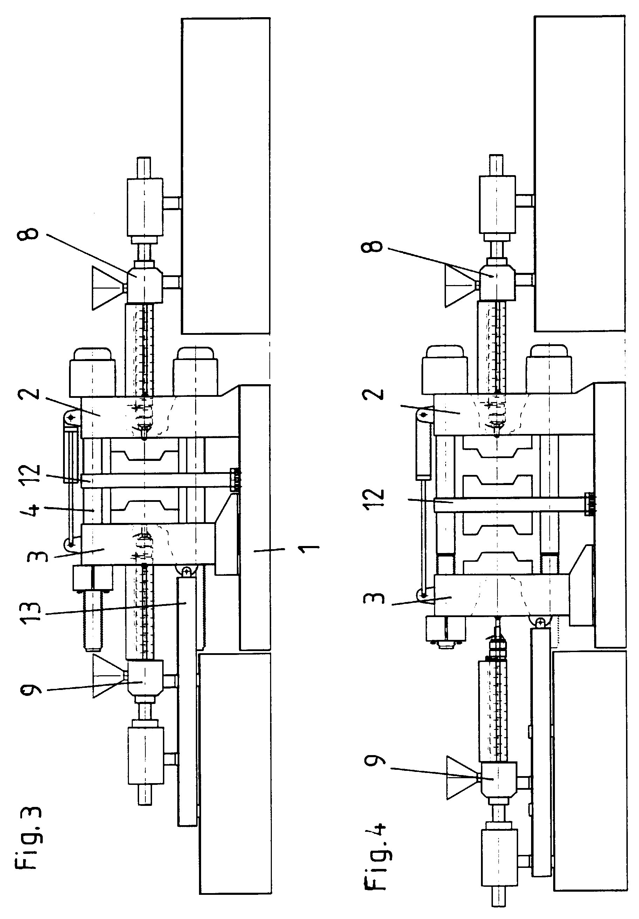

Die Fig. 3 und 4 zeigen ein Ausführungsbeispiel der Erfindung, wobei zwischen der ortsfesten Formaufspannplatte 2 und einer bewegbaren Formaufspannplatte 3, die mit einer Einspritzeinrichtung 9 versehen ist, eine bewegbare Mittelplatte 12 vorgesehen ist. Anstelle der bewegbaren Mittelplatte 12 mit zwei Formhälften könnte an den Formaufspannplatten 2, 3 auch eine Etagenform montiert sein.

In beiden Fällen fällt wegen der separaten Einspritzeinrichtungen 8, 9 das Balancieren der Kavitäten bzw. Heißkanäle weg.

## Patentansprüche

1. Spritzgießeinrichtung mit einer ortsfesten Formaufspannplatte und mindestens einer bewegbaren Formaufspannplatte sowie die bewegbare Formaufspannplatte durchsetzenden Holmen zum Verbinden der Formaufspannplatten und einer Einspritzeinrichtung, dadurch gekennzeichnet, daß sowohl an der ortsfesten Formaufspannplatte (2) als auch an der von der ortsfesten Formaufspannplatte (2) abgewandten Seite einer bewegbaren Formaufspannplatte (3) eine Einspritzeinrichtung (9) vorgesehen ist, wobei die Einspritzeinrichtung (9) zum Einspritzen durch die bewegbare Formaufspannplatte (3) und die Einspritzeinrichtung (8) zum Einspritzen durch die ortsfeste Formaufspannplatte (2) einander gegenüberliegen.

2. Spritzgießeinrichtung nach Anspruch 1, dadurch gekennzeichnet, daß die Längsmittelachse der Einspritzeinrichtung (9) zum Einspritzen durch die bewegbare Formaufspannplatte (3) mit der Längsmittelachse der Spritzgießeinrichtung zusammenfällt.

3. Spritzgießeinrichtung nach Anspruch 1 oder 2, dadurch gekennzeichnet, daß die Einspritzeinrichtung (9) zum Einspritzen durch die bewegbare Formaufspannplatte (3) auf einer mit der bewegbaren Formaufspannplatte (3) verbundenen Konsole (11) verschiebbar gelagert ist.

4. Spritzgießeinrichtung nach einem der Ansprüche 1 bis 3, gekennzeichnet durch eine bewegbare Mittelplatte (12).

5. Spritzgießeinrichtung nach einem der Ansprüche 1 bis 3, dadurch gekennzeichnet, daß an den Formaufspannplatten (2, 3) eine Etagenform montiert ist.
